# EUROPEAN PATENT APPLICATION

(11) **EP 2 806 305 A1**
(43) Date of publication of application: **26.11.2014**
(21) Application number: 14169326.7
(22) Date of filing: 21.05.2014
(51) Int. Cl.: G02F 1/1333

(54) **Display device**

(30) Priority: 24.05.2013 JP 2013109778
(71) Applicant: Funai Electric Co., Ltd., Daito-shi, Osaka 574-0013 (JP)
(72) Inventor: Mori, Yasuhiro, Daito-shi, Osaka 574-0013 (JP); Kobayashi, Masayoshi, Daito-shi, Osaka 574-0013 (JP); Tanaka, Kazuya, Daito-shi, Osaka 574-0013 (JP)
(74) Representative: Global IP Europe Patentanwaltskanzlei

(57) **Abstract**

A display device includes a display panel, a rear frame, a support member and a fastening member. The rear frame is disposed on a rear side of the display device with respect to the display panel. The rear frame has a protrusion on a peripheral edge of the rear frame. The protrusion protrudes toward a front side of the display device. The support member is disposed corresponding to the peripheral edge of the rear frame. The support member supports an outer peripheral part of the display panel from the rear side. The fastening member extends in a direction substantially perpendicular to the display panel. The fastening member fastens the support member with the protrusion of the rear frame.

## Description

### CROSS-REFERENCE TO RELATED APPLICATIONS

This application claims priority to Japanese Patent Application No. 2013-109778 filed on May 24, 2013. The entire disclosure of Japanese Patent Application No. 2013-109778 is hereby incorporated herein by reference.

### BACKGROUND

### Field of the Invention

This invention generally relates to a display device. More specifically, the present invention relates to a display device for displaying images.

### Background Information

Conventionally, display devices, such as liquid crystal television sets, are well known in the art (see Japanese Unexamined Patent Application Publication No. H05-103284 (Patent Literature 1), for example). Conventional display devices have a backlight unit for shining light toward the rear face of a display panel.

The housing of such display devices has a plastic front cabinet disposed so as to cover the outer peripheral part of the display panel, and a sheet metal rear frame disposed on the rear face side of the display panel. A frame-shaped holding plate is attached to a flange on the rear frame. A cell guide for supporting the outer peripheral part of the display panel from the rear face side thereof is attached to this holding plate. The outer peripheral part of the display panel on the front side is covered by a bezel. The bezel, the cell guide, the holding plate, and the rear frame are fastened together by screws.

### SUMMARY

It has become desirable in recent years to slim down the portion around the display panel that does not contribute to image display (known as the frame portion). However, it has been discovered that with the conventional display devices discussed above, since the holding plate is attached to the flange of the rear frame, the size of the flange increases by an amount corresponding to the width of the holding plate. Thus, the frame portion of the display device becomes larger.

One aspect is to provide a display device with which a frame portion can be slimmed down.

In view of the state of the known technology, a display device is provided that includes a display panel, a rear frame, a support member and a fastening member. The rear frame is disposed on a rear side of the display device with respect to the display panel. The rear frame has a protrusion on a peripheral edge of the rear frame. The protrusion protrudes toward a front side of the display device. The support member is disposed corresponding to the peripheral edge of the rear frame. The support member supports an outer peripheral part of the display panel from the rear side. The fastening member extends in a direction substantially perpendicular to the display panel. The fastening member fastens the support member with the protrusion of the rear frame.

Also other objects, features, aspects and advantages of the present disclosure will become apparent to those skilled in the art from the following detailed description, which, taken in conjunction with the annexed drawings, discloses one embodiment of the display device.

### BRIEF DESCRIPTION OF THE DRAWINGS

Referring now to the attached drawings which form a part of this original disclosure:
FIG. 1 is a front elevational view of a display device in accordance with a first embodiment;
FIG. 2 is an exploded perspective view of the display device in accordance with the first embodiment;
FIG. 3 is a cross sectional view of the display device, taken along A-A line in FIG. 1;
FIG. 4 is a partial cross sectional view of the display device, illustrating a detail view of the display device in FIG. 3;
FIG. 5 is a partial perspective view of the display device, illustrating a rear face side of a cell guide of the display device;
FIG. 6 is a partial perspective view of the display device, illustrating a protrusion provided to a flange of a rear frame of the display device;
FIG. 7 is a partial cross sectional view of a display device in accordance with a second embodiment;
FIG. 8 is a partial perspective view of the display device illustrated in FIG. 7, illustrating a state before an opening in a flange of a rear frame of the display device is covered by a cover member;
FIG. 9 is a partial perspective view of the display device illustrated in FIG. 7, illustrating a state when the opening in the flange of the rear frame of the display device is covered by the cover member; and
FIG. 10 is a partial cross sectional view of a display device in accordance with a third embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents. Specifically, the numerical values, shapes, materials, constituent elements, layout and connection of the constituent elements, and so forth described in the following embodiments are provided all just for illustration only and not for the purpose of limiting the the invention. The invention is merely defined by the appended claims. Of the constituent elements in the following embodiments, those not discussed in an independent claim are not necessarily required, but will be described for understanding of the embodiments.

### FIRST EMBODIMENT

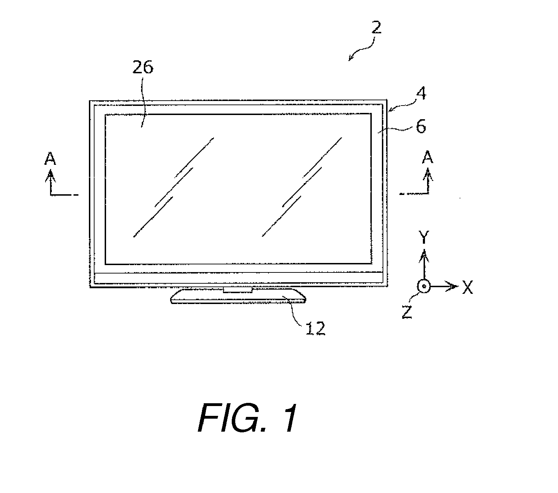

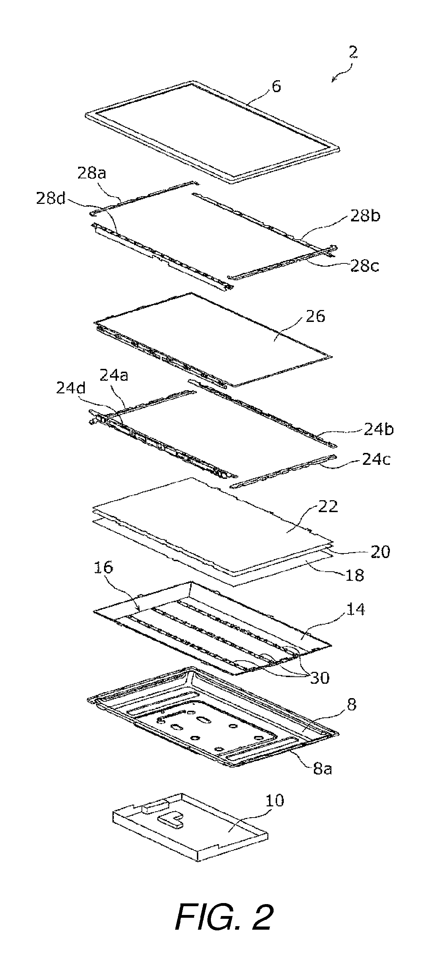

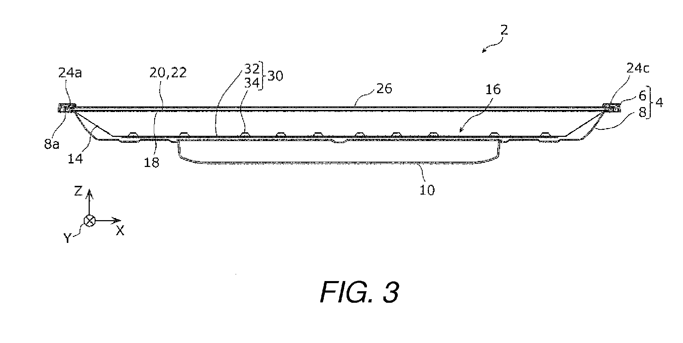

Referring initially to FIGS. 1 to 3, a display device 2 is illustrated in accordance with a first embodiment. FIG. 1 is a front elevational view of the display device 2. FIG. 2 is an exploded perspective view of the display device 2. FIG. 3 is a cross sectional view of the display device 2, taken along A-A line in FIG. 1.

As shown in FIGS. 1 to 3, the display device 2 in this embodiment is a liquid crystal television set equipped with a housing 4. The housing 4 is made up of a front cabinet 6 and a rear frame 8 that are fitted together.

The front cabinet 6 is configured in the form of a frame, and covers the outer peripheral part of a liquid crystal cell 26 (e.g., a display panel; discussed below). The front cabinet 6 is formed from plastic, for example.

The rear frame 8 is disposed on a rear side of the display device 2 with respect to the liquid crystal cell 26 so as to cover the rear face side of the liquid crystal cell 26. A rectangular flange 8a (e.g., a peripheral edge of the rear frame 8) that extends toward the outside of the rear frame 8 and is substantially parallel to the liquid crystal cell 26 is provided to an opening in the rear frame 8. The rear frame 8 is formed from sheet metal, such as SECC (steel, electrically chromate coated).

A rear cover 10 is attached in the center part of the outer face of the rear frame 8 (i.e., the face on the opposite side from the liquid crystal cell 26 side). A power supply board or the like (not shown) for supplying power to the liquid crystal cell 26, etc., is disposed in the interior of the rear cover 10. A stand 12 for supporting the housing 4 from below is attached to the lower end of the rear cover 10. The rear cover 10 is formed from plastic, for example.

The display device 2 further includes a reflecting sheet 14, a backlight unit 16, a diffusion plate 18, a pair of optical sheets 20 and 22, four cell guides 24a to 24d (e.g., support members), the liquid crystal cell 26, and four bezels 28a to 28d. The reflecting sheet 14, the backlight unit 16, the diffusion plate 18, the optical sheets 20 and 22, the cell guides 24a to 24d, the liquid crystal cell 26, and the bezels 28a to 28d are disposed in the interior of the housing 4.

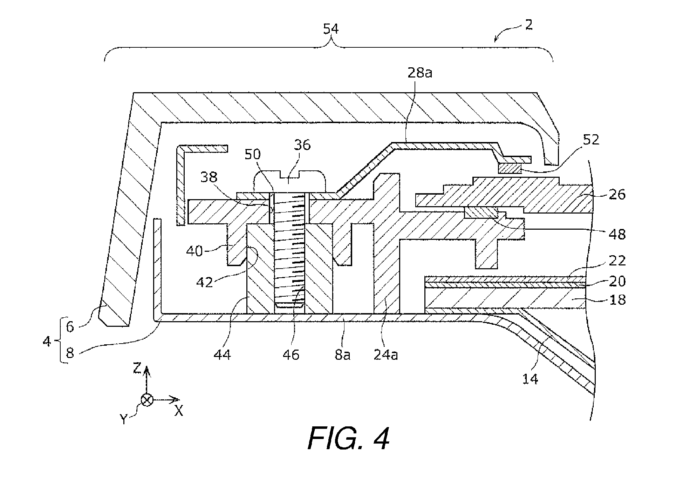

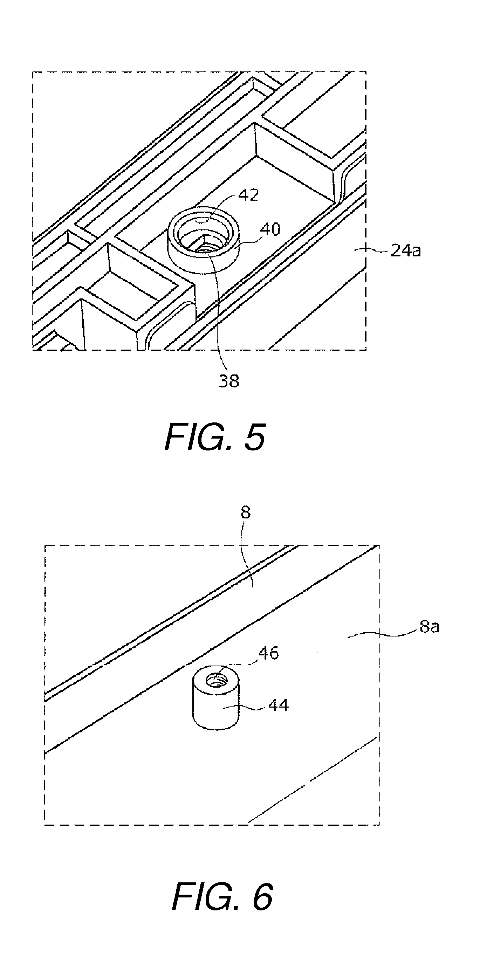

Next, the internal structure of the display device 2 will be described through reference to FIGS. 4 to 6. FIG. 4 is a partial cross sectional view of the display device 2 illustrating a detail view of the display device 2 in FIG. 3. FIG. 5 is a partial perspective view of the display device 2, illustrating the rear face side of the cell guide 24a. FIG. 6 is a partial perspective view of the display device 2, illustrating a protrusion 44 provided to the flange 8a of the rear frame 8.

As shown in FIG. 4, the outer peripheral parts of the reflecting sheet 14, the diffusion plate 18, and the pair of optical sheets 20 and 22 are supported by the flange 8a of the rear frame 8.

The reflecting sheet 14 is disposed so as to cover the inner face of the rear frame 8 (i.e., the face on the side where the liquid crystal cell 26 is disposed). The reflecting sheet 14 has the function of reflecting light from the backlight unit 16.

The backlight unit 16 is a directly-under type of backlight unit, and is used to shine light toward the rear face of the liquid crystal cell 26. As shown in FIGS. 2 and 3, the backlight unit 16 has a plurality of LED (light emitting diode) bars 30. Each of the LED bars 30 has a wiring board 32 and a plurality of LEDs 34 mounted on the wiring board 32. The wiring board 32 is in the form of a long, slender, flat piece. The LEDs 34 are disposed spaced apart and in a row in the lengthwise direction of the wiring board 32. The wiring board 32 is attached to the inner face of the rear frame 8 by double-side tape (not shown) having thermal conductivity. The wiring board 32 is formed from a metal with high thermal conductivity, such as aluminum.

As shown in FIGS. 3 and 4, the diffusion plate 18 is disposed between the backlight unit 16 and the liquid crystal cell 26. The diffusion plate 18 has the function of diffusing light from the backlight unit 16. The optical sheets 20 and 22 are each disposed so as to cover the face of the diffusion plate 18 on the liquid crystal cell 26 side in a state in which they have been superposed with one another. Each of the optical sheets 20 and 22 has the function of guiding the light diffused by the diffusion plate 18 to the rear face of the liquid crystal cell 26, for example.

The cell guides 24a to 24d for supporting the outer peripheral part of the liquid crystal cell 26 from its rear face side are disposed on the corresponding sides of the flange 8a of the rear frame 8. The cell guides 24a to 24d are fitted together to create an overall frame shape. Each of the cell guides 24a to 24d is formed from plastic, for example. As shown in FIGS. 4 and 5, each of the cell guide 24a to 24d (only the cell guide 24a is shown in FIGS. 4 and 5) includes a through-hole 38, a fixing component 40, and a concave component 42. A screw 36 (e.g., a fastening member; discussed below) is inserted into the through-hole 38. The fixing component 40 is provided to the rear face of each of the cell guides 24a to 24d (i.e., on the face on the opposite side from the side where the liquid crystal cell 26 is disposed). The fixing component 40 is disposed so as to surround the through-hole 38. The fixing component 40 is configured cylindrically. The concave component 42 with a circular cross section is formed in the interior of the fixing component 40. Of course, each of the cell guides 24a to 24d can include a plurality of (two, for example) sets of the through-hole 38, the fixing component 40 and the concave component 42.

Regarding the cell guides 24a to 24d, as shown in FIGS. 4 and 6, the protrusions 44 that protrude toward the liquid crystal cell 26 side are attached to the sides of the flange 8a of the rear frame 8. In this embodiment, the protrusions 44 are formed by a stud or standoff that has a screw hole 46 with female threads and a circular cross section. The screw hole 46 that extends in the axial direction of the protrusion 44 is provided to the protrusion 44. The protrusions 44 are formed from SUS or the like, for example, and are attached by crimping or press-deforming to the inner face of the flange 8a of the rear frame 8. Of course, the protrusions 44 can be attached to the inner face of the flange 8a in a different manner. One or more of the protrusions 44 are attached on each side of the flange 8a of the rear frame 8, according to the size of the liquid crystal cell 26, for example. In the illustrated embodiment, the rear frame 8 can include a plurality of protrusions 44 corresponding to the total number of the concave components 42 of the cell guides 24a to 24d. In the illustrated embodiment, the the rear frame 8 has the protrusions 44 on the flange 8a of the rear frame 8. The protrusions 44 protrude relative to the flange 8a toward a front side of the display device 2.

The cell guides 24a to 24d are disposed on the sides of the flange 8a of the rear frame 8 so that the distal ends of the protrusions 44 will be inserted into the concave components 42 of the cell guides 24a to 24d. As shown in FIG. 4, when the distal ends of the protrusions 44 are inserted into the concave components 42, the cell guides 24a to 24d are positioned with respect to the sides of the flange 8a of the rear frame 8. At this point, the axis of each through-hole 38 (e.g., through hole) of the cell guides 24a to 24d is aligned with the axis of the screw hole 46 (e.g., threaded hole) in each protrusion 44.

The liquid crystal cell 26 is configured as a rectangular panel. As shown in FIG. 4, the outer peripheral part of the liquid crystal cell 26 are supported by the cell guides 24a to 24d that have been fitted together into a frame shape. Cushioning members 48 are attached to the surfaces of the cell guides 24a to 24d (that is, on the side where the liquid crystal cell 26 is disposed). These cushioning members 48 are disposed between the liquid crystal cell 26 and the cell guides 24a to 24d. An image is displayed on the liquid crystal cell 26 when light from the backlight unit 16 is shined on the rear face of the liquid crystal cell 26.

The bezels 28a to 28d are disposed on the front side of the cell guides 24a to 24d (i.e., on the side where the liquid crystal cell 26 is disposed). The bezels 28a to 28d are fitted together to create an overall frame shape. The bezels 28a to 28d are formed from SECC or the like, for example. As shown in FIG. 4, each of the bezels 28a to 28d has a through-hole 50 into which the screw 36 is inserted, the through-holes 50 are disposed corresponding to the above-mentioned through-holes 38, respectively.

The screws 36 are passed through the through-holes 50 of the bezels 28a to 28d and through the cell guides 24a to 24d, and threaded into or threadedly coupled to the screw holes 46 of the protrusions 44. The screws 36 extend in a direction substantially perpendicular to the liquid crystal cell 26 (that is, the Z direction). Consequently, the bezels 28a to 28d and the cell guides 24a to 24d are fixed to the rear frame 8. The outer peripheral part of the liquid crystal cell 26 is sandwiched between the bezels 28a to 28d and the cell guides 24a to 24d. Cushioning members 52 are attached to the rear face sides of the bezels 28a to 28d (that is, the side on which the liquid crystal cell 26 is disposed). These cushioning members 52 are interposed between the liquid crystal cell 26 and the bezels 28a to 28d.

The front cabinet 6 is attached to the rear frame 8 by a plurality of screws (not shown) so as to cover the bezels 28a to 28d that have been fitted together in a frame shape.

Next, the effect obtained with the display device 2 in this embodiment will be described. As discussed above, the protrusions 44 are attached to the flange 8a of the rear frame 8, and the bezels 28a to 28d and the cell guides 24a to 24d are fastened to these protrusions 44. This allows the size of the flange 8a of the rear frame 8 to be kept small. Thus, the frame portion 54 of the display device 2 (see FIG. 4) can be slimmed down.

Furthermore, the bottom part of the screw holes 46 in the protrusions 44 is blocked off. Thus, the distal ends of the screws 36 cannot be seen on the outside of the display device 2, which improves the aesthetics of the display device 2.

Furthermore, as discussed above, when the distal ends of the protrusions 44 are inserted into the concave components 42 of the cell guides 24a to 24d, this positions the cell guides 24a to 24d with respect to the rear frame 8. This allows the cell guides 24a to 24d to be fixed to the rear frame 8, and each of the cell guides 24a to 24d to be positioned at one place (at the protrusion 44 on each side of the rear frame 8) with respect to the rear frame 8. As a result, the configurations of the cell guides 24a to 24d and the rear frame 8 can be simplified.

### SECOND EMBODIMENT

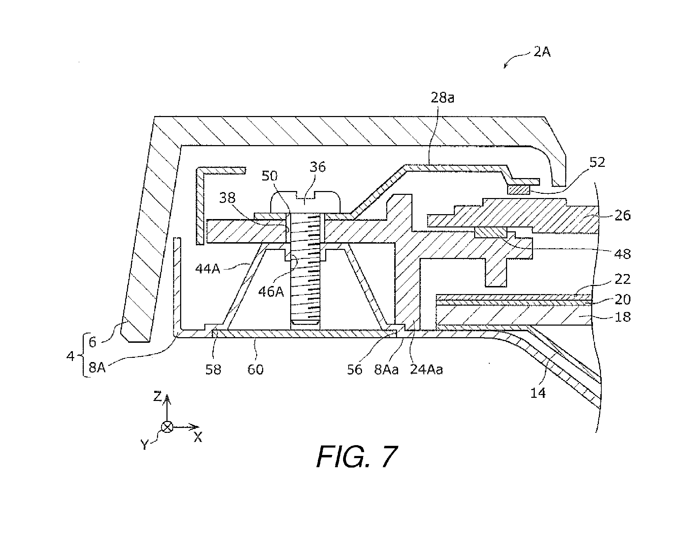

Referring now to FIGS. 7 to 9, a display device 2A in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment can be omitted for the sake of brevity.

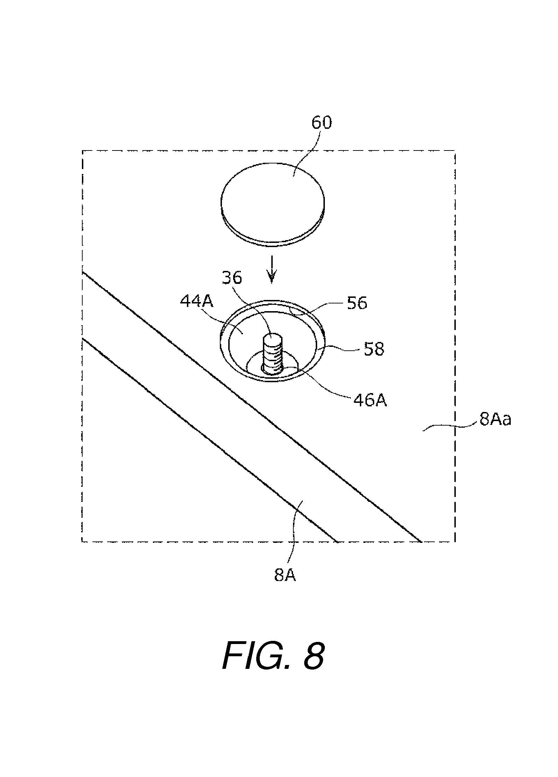

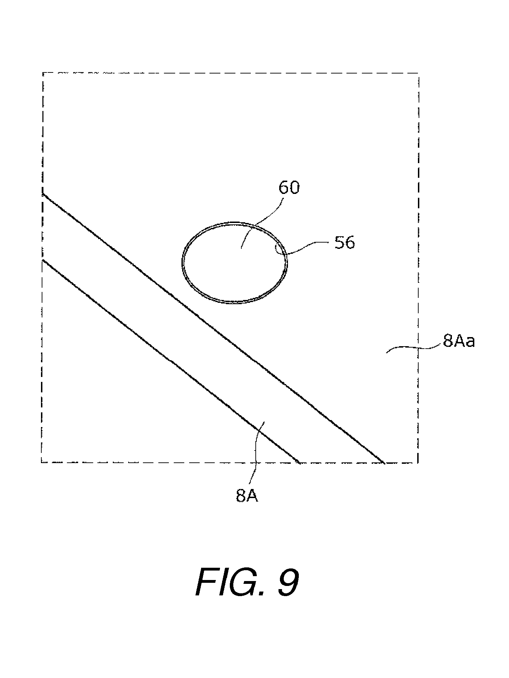

FIG. 7 is a partial cross sectional view of the display device 2A. FIG. 8 is a partial perspective view of the display device 2A illustrated in FIG. 7, illustrating a state before an opening 56 in a flange 8Aa of a rear frame 8A of the display device 2A is covered by a cover member 60. FIG. 9 is a partial perspective view of the display device 2A illustrated in FIG. 7, illustrating a state when the opening 56 in the flange 8Aa of the rear frame 8A of the display device 2A is covered by the cover member 60. With the display device 2A in this embodiment, a plurality of protrusions 44A (e.g., a plurality of drawing parts) are formed by the drawing of sheet metal, in which part of the flange 8Aa of the rear frame 8A is drawn towards a liquid crystal cell 26 side. The protrusions 44A are in the form of a truncated cylinder, for example. Screw holes 46A formed by the burring of sheet metal, for example, are provided to the protrusions 44A, respectively. A screw 36 passes through a through-hole 38 in a cell guide 24Aa (e.g., a through hole of a support member) and a through-hole 50 in a bezel 28a, and threaded into or threadedly coupled to the screw hole 46A (e.g., the threaded hole) of corresponding one of the protrusions 44A. This gives the same configuration as in the first embodiment above. The fixing component 40 described in the first embodiment is not provided to the cell guide 24Aa. Of course, the cell guide 24Aa can include a plurality of through-holes 38 as needed and/or desired, and the bezel 28a can include a plurality of through-holes 50 as needed and/or desired corresponding to the through-holes 38. Also, display device 2A includes other cell guides, corresponding to the cell guides 24b to 24d in the first embodiment, similarly formed as the cell guide 24Aa. In the illustrated embodiment, the protrusions 44A each have a drawing part that is formed by drawing a part of the flange 8Aa (e.g., the peripheral edge) of the rear frame 8A to the front side of the display device 2A.

As shown in FIGS. 7 and 8, a plurality of circular openings 56 that communicate with the interior of the protrusions 44A (that is, with the spaces on the concave side of the protrusions 44A) are formed in the outer face (e.g., the rear side face) of the rear frame 8A on the rear side of the display device 2A. A stepped part 58 is provided to the peripheral edge of each opening 56. As shown in FIGS. 7 and 9, these openings 56 are each covered by the cover member 60 in the form of a circular sheet. The cover members 60 are, for example, adhesive seals having an adhesive layer (not shown) on their back side, such as pressure-sensitive adhesive seals. The cover members 60 are formed from opaque plastic or paper, for example. Thus covering the openings 56 with the cover members 60 prevents the distal ends of the screws 36 from being visible on the outside of the display device 2A, which ensures good aesthetics of the display device 2A. Thus, in the illustrated embodiment, the cover members 60 are attached to the outer face of the rear frame 8A on the rear side of the display device 2A to cover the openings 56 of the rear frame 8A that communicates with the interior of the protrusions 44A of the rear frame 8A.

The outer peripheral part on the rear face side of each of the cover members 60 is disposed in the stepped part 58. This allows the surface of the cover members 60 to be disposed in substantially the same plane as the outer face of the rear frame 8A, which ensures good aesthetics of the display device 2A. In the illustrated embodiment, the rear frame 8A has the stepped part 58 along the peripheral edge of each of the openings 56 of the rear frame 8A. The outer peripheral parts of the cover members 60 are disposed on the stepped parts 58 of the rear frame 8A.

### THIRD EMBODIMENT

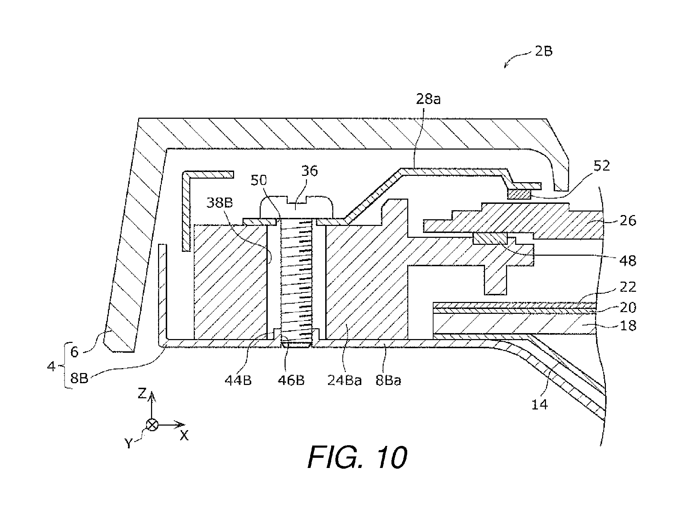

Referring now to FIG. 10, a display device 2B in accordance with a third embodiment will now be explained. In view of the similarity between the first to third embodiments, the parts of the third embodiment that are identical to the parts of the first or second embodiment will be given the same reference numerals as the parts of the first or second embodiment. Moreover, the descriptions of the parts of the third embodiment that are identical to the parts of the first or second embodiment can be omitted for the sake of brevity.

FIG. 10 is a partial cross sectional view of the display device 2B.

With the display device 2B in this embodiment, a plurality of protrusions 44B (e.g., a plurality of burring parts) are formed by the burring of sheet metal, in which part of a flange 8Ba of a rear frame 8B is burred towards a liquid crystal cell 26 side. The protrusions 44B are cylindrical in shape, and screw holes 46B (e.g., threaded holes) are provided on the inside of the protrusions 44B. A through-hole 38B in a cell guide 24Ba (e.g., a through hole of a support member) axially extends from a rear face of a bezel 28a to an inner face of the flange 8Ba. A screw 36 passes through a through-hole 50 in the bezel 28a and the through-hole 38B in the cell guide 24Ba, and are threaded into or threadedly coupled to the screw hole 46B of corresponding one of the protrusions 44B. This gives the same configuration as in the first embodiment above. Of course, the cell guide 24Ba can include a plurality of through-holes 38 as needed and/or desired, and the bezel 28a can include a plurality of through-holes 50 as needed and/or desired corresponding to the through-holes 38. Also, display device 2B includes other cell guides, corresponding to the cell guides 24b to 24d in the first embodiment, similarly formed as the cell guide 24Ba. In the illustrated embodiment, the protrusions 44B each have a burring part that is formed by burring a part of the flange 8Ba (e.g., the peripheral edge) of the rear frame 8B to the front side of the display device 2B.

The display devices in accordance with the first to third embodiments are described above for illustration only. However, the present invention is not limited to these embodiments. For example, the various embodiments given above can be combined with each other.

In the above embodiments, the display devices are a liquid crystal television set. However, the display devices can be a liquid crystal monitor for a personal computer, for example, instead of a liquid crystal television set.

In the above embodiments, the fastening members are screws, but they can be rivets, fixing pins, or the like, for example, instead of screws.

The display devices can be applied as a liquid crystal television set or the like, for example.

With the display device in accordance with an aspect of the present invention includes a display panel, a rear frame, a support member and a fastening member. The rear frame is disposed on a rear side of the display device with respect to the display panel. The rear frame has a protrusion on a peripheral edge of the rear frame. The protrusion protrudes toward a front side of the display device. The support member is disposed corresponding to the peripheral edge of the rear frame. The support member supports an outer peripheral part of the display panel from the rear side. The fastening member extends in a direction substantially perpendicular to the display panel. The fastening member fastens the support member with the protrusion of the rear frame.

With this aspect, the protrusion is provided to the peripheral edge of the rear frame, and the support member is fastened to this protrusion by the fastening member. This keeps the size of the peripheral edge of the rear frame small, so the frame portion of the display device can be slimmed down.

For example, with the display device in accordance with an aspect of the present invention, the configuration can be such that the rear frame is made of sheet metal.

With this aspect, since the rear frame is formed from sheet metal, the protrusion can be formed by various kinds of sheet metal working.

For example, with the display device in accordance with an aspect of the present invention, the configuration can be such that the protrusion includes a stud that is attached to the peripheral edge of the rear frame.

With this aspect, the protrusion can be formed by the stud.

For example, with the display device in accordance with an aspect of the present invention, the configuration can be such that the support member has a concave component, and the support member is positioned with respect to the rear frame by inserting a distal end of the protrusion into the concave component.

With this aspect, the support member is positioned with respect to the rear frame by inserting the distal end of the protrusion into the concave component of the support member. This allows the fixing of the support member to the rear frame and the positioning of the support member with respect to the rear frame to be performed at a single location (the protrusion). As a result, the configurations of the support member and the rear frame can be simplified.

For example, with the display device in accordance with an aspect of the present invention, the configuration can be such that the protrusion has a drawing part that is formed by drawing a part of the peripheral edge of the rear frame to the front side.

With this aspect, the protrusion can be formed by drawing the sheet metal, for example.

For example, with the display device in accordance with an aspect of the present invention, the configuration can be such that the display device further includes a cover member attached to a rear side face of the rear frame on the rear side of the display device to cover an opening of the rear frame that communicates with an interior of the protrusion of the rear frame.

With this aspect, since the opening in the rear frame can be covered by the cover member, the distal end of the fastening member, etc., will not appear on the outside of the display device, which ensures a good aesthetic appearance of the display device.

For example, with the display device in accordance with an aspect of the present invention, the configuration can be such that the rear frame has a stepped part along the peripheral edge of the opening of the rear frame. An outer peripheral part of the cover member is disposed on the stepped part of the rear frame.

With this aspect, since the stepped part is provided to the peripheral edge of the opening, the surface of the cover member can be disposed in substantially the same plane as the outer face or the rear side face of the rear frame by disposing the outer peripheral part of the cover member at this stepped part. This ensures good aesthetics of the display device.

For example, with the display device in accordance with an aspect of the present invention, the configuration can be such that the protrusion has a burring part that is formed by burring a part of the peripheral edge of the rear frame to the front side.

With this aspect, the protrusion can be formed by burring the sheet metal, for example.

With the display device in accordance with an aspect of the present invention, the frame portion can be slimmed down.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a display device in an upright position. Accordingly, these directional terms, as utilized to describe the display device should be interpreted relative to a display device in an upright position.

Also it will be understood that although the terms "first" and "second" may be used herein to describe various components these components should not be limited by these terms. These terms are only used to distinguish one component from another. Thus, for example, a first component discussed above could be termed a second component and vice-a-versa without departing from the teachings of the present invention. The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives. Finally, terms of degree such as "substantially", "about" and "approximately" as used herein mean an amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A display device comprising:
a display panel;
a rear frame disposed on a rear side of the display device with respect to the display panel, the rear frame having a protrusion on a peripheral edge of the rear frame, the protrusion protruding toward a front side of the display device;
a support member disposed corresponding to the peripheral edge of the rear frame, the support member supporting an outer peripheral part of the display panel from the rear side; and
a fastening member extending in a direction substantially perpendicular to the display panel, the fastening member fastening the support member with the protrusion of the rear frame.

2. The display device according to claim 1, wherein
the rear frame is made of sheet metal.

3. The display device according to claim 1 or 2, wherein
the protrusion includes a stud that is attached to the peripheral edge of the rear frame.

4. The display device according to claim 3, wherein
the stud of the rear frame has a threaded hole,
the support member has a through hole, and
the fastening member extends through the through hole of the support member and is threadedly coupled to the threaded hole of the stud of the rear frame.

5. The display device according to any one of claims 1 to 4, wherein
the support member has a concave component, and
the support member is positioned with respect to the rear frame by inserting a distal end of the protrusion into the concave component.

6. The display device according to any one of claims 1 to 5, wherein
the protrusion has a drawing part that is formed by drawing a part of the peripheral edge of the rear frame to the front side.

7. The display device according to claim 6, wherein
the drawing part of the rear frame has a threaded hole,
the support member has a through hole, and
the fastening member extends through the through hole of the support member and is threadedly coupled to the threaded hole of the drawing part of the rear frame.

8. The display device according to any one of claims 1 to 7, further comprising
a cover member attached to a rear side face of the rear frame on the rear side of the display device to cover an opening of the rear frame that communicates with an interior of the protrusion of the rear frame.

9. The display device according to claim 8, wherein
the rear frame has a stepped part along the peripheral edge of the opening of the rear frame, an outer peripheral part of the cover member being disposed on the stepped part of the rear frame.

10. The display device according to any one of claims 1 to 9, wherein
the protrusion has a burring part that is formed by burring a part of the peripheral edge of the rear frame to the front side.

11. The display device according to claim 10, wherein
the burring part of the rear frame has a threaded hole,
the support member has a through hole, and
the fastening member extends through the through hole of the support member and is threadedly coupled to the threaded hole of the burring part of the rear frame.
